Europäisches Patentamt

European Patent Office

Office européen des brevets

(11) Numéro de publication: **0 061 124**
A1

## (12) DEMANDE DE BREVET EUROPEEN

(21) Numéro de dépôt: 82102112.8

(22) Date de dépôt: 16.03.82

(51) Int. Cl.³: **G 02 B 5/16**
**H 01 B 13/00**

(30) Priorité: 20.03.81 FR 8105593

(43) Date de publication de la demande:
29.09.82 Bulletin 82/39

(84) Etats contractants désignés:
CH DE FR GB IT LI NL SE

(71) Demandeur: LES CABLES DE LYON Société anonyme dite:
170 quai de Clichy
F-92111 Clichy Cedex(FR)

(72) Inventeur: Vives, Jean-Patrick
34, rue Masséna
F-62100 Calais(FR)

(74) Mandataire: Weinmiller, Jürgen et al,
Zeppelinstrasse 63
D-8000 München 80(DE)

(54) Dispositif suiveur de pas de rainures hélicoïdales.

(57) Dispositif suiveur de pas de rainures hélicoïdales à la périphérie d'un noyau longitudinal entraîné en translation, caractérisé en ce qu'il comporte, montés autour dudit noyau, deux flasques (11, 12) reliés l'une à l'autre par des fils métalliques (13) formant ressort s'appliquant sur les rainures (21, 22) pour suivre leur rotation apparente lors de la translation dudit noyau (2).

Application à la mise en place de fibres optiques sur un noyau porteur rainuré

FIG.2

EP 0 061 124 A1

Dispositif suiveur de pas de rainures hélicoïdales

La présente invention a pour objet un dispositif suiveur de pas de rainures hélicoïdales, en particulier utilisé dans un poste de mise en place de fibres optiques dans des rainures hélicoïdales à la périphérie d'un noyau porteur, pour la constitution de câbles à fibres optiques pouvant être de grande longueur.

D'une manière générale, la pose de fibres optiques dans les rainures hélicoïdales du noyau porteur alors entraîné en translation est assurée à partir de bobines débitrices montées sur un plateau ou support tournant d'un tour par avance du noyau porteur d'un pas des rainures. Elle nécessite, en conséquence, un asservissement permanent de la vitesse de rotation du plateau ou support de bobines à la rotation apparente des rainures hélicoïdales autour de l'axe du noyau au cours de sa translation, pour que les fibres soient émises par les bobines sous un angle correct assurant une bonne mise en place dans les rainures.

Selon une suggestion faite antérieurement, c'est une filière portant un ergot pénétrant dans les rainures hélicoïdales du noyau qui avait pour fonction de permettre une détection électrique de la vitesse de rotation apparente des rainures hélicoïdales au cours de la translation du noyau. Dans la réalisation correspondante du poste de pose de fibres sur le noyau rainuré, cet ergot est un élément relativement fragile, de plus, il provoque ou peut provoquer une usure donc une dégradation du profil des rainures et s'use lui-même très rapidement.

La présente invention a pour but de remédier à de tels inconvénients en proposant un dispositif suiveur de pas de rainures hélicoïdales formées à la périphérie d'un noyau lors de l'entraînement en translation de celui-ci, de réalisation simple et présentant une grande robustesse.

L'invention a pour objet un dispositif suiveur de pas de rainures hélicoïdales portées à la périphérie d'un noyau longitudinal entraîné en translation comportant deux flasques montés autour dudit noyau et reliés entre eux par des fils formant ressort entourant ledit noyau en venant s'appliquer sur lesdites rainures.

Les flasques ainsi reliés constituent autour du noyau rainuré une cage suiveuse entraînée à la vitesse de rotation apparente des rainures hélicoïdales au cours de la translation du noyau. Cette cage suiveuse permet alors dans un poste de pose de fibres optiques dans les rainures hélicoïdales du noyau porteur, par un détecteur associé, une détection électrique de phase de la rotation apparente des rainures et à partir d'une détection électrique analogue de phase de la rotation du plateau ou support de bobines de fibres optiques, une correction ou un asservissement de phase de la rotation de ce plateau ou support de bobines.

Selon une caractéristique de mise en oeuvre préférée de l'invention chacun des flasques présente une fente de largeur au moins égale à la dimension transversale du support rainuré, s'étendant depuis une zone sensiblement médiane à sa périphérie, pour un montage direct de la cage suiveuse qu'ils cons tituent avec les fils formant ressort sur ledit support.

L'invention sera décrite ci-après plus en détail à l'aide d'une mise en oeuvre préférée et des figures du dessin annexé.

Dans ce dessin :

- la figure 1 est une vue schématique d'un poste de mise en place de fibres optiques sur un noyau rainuré, comportant le dispositif selon l'invention,

- la figure 2 est une vue partielle en perspective du poste selon la figure 1, avec le dispositif selon l'invention.

- la figure 3 est une vue de face du dispositif selon la figure 1 avant mise en place sur le noyau rainuré,

- la figure 4 est une vue de côté en demi-coupe de l'un des éléments du dispositif selon la figure 1,

- la figure 5 est une vue analogué à celle de la figure 3 après mise en place sur le noyau rainuré.

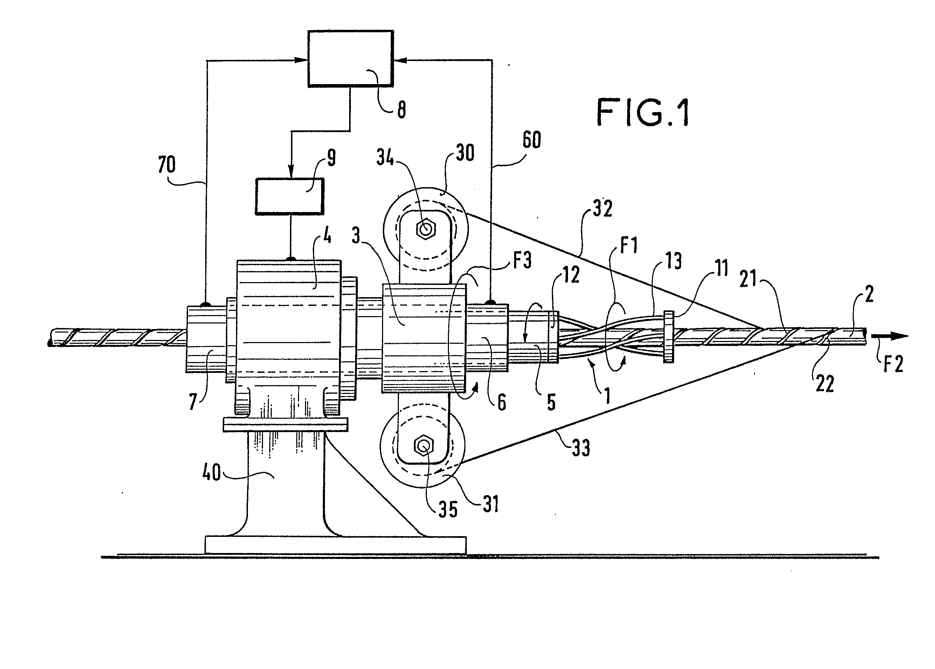

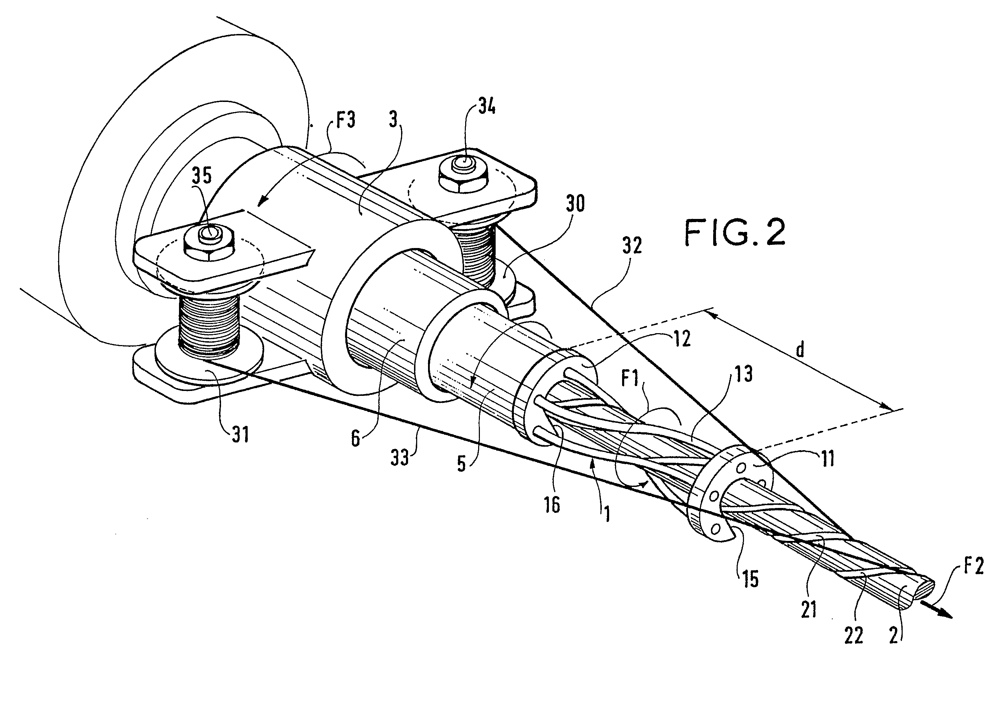

En regard des figures 1 et 2, le dispositif suiveur de pas de rainures hélicoïdales est désigné par la référence générale 1. Il est monté sur un noyau cylindrique 2 présentant à sa périphérie des rainures hélicoïdales 21 et 22, ici au nombre de deux dont on veut suivre l'avance des pas au cours de la translation du noyau 2, entraîné par tout moyen approprié non représenté, dans le sens de la flèche F2.

Le dispositif 1 suiveur de pas des rainures, selon l'invention, comporte deux flasques 11 et 12, circulaires reliés l'un à l'autre par des fils d'acier 13 formant ressort. Ces fils d'acier sont ici au nombre de quatre. Ils ont chacun leurs extrémités fixées dans les flasques respectivement, et régulièrement réparties au voisinage de la périphérie de chacun des flasques. Ces fils sont choisis de diamètre au moins légèrement supérieur à la largeur des rainures, leurs portions centrales viennent s'appliquer étroitement sur les rainures 21 et 22, deux fils d'acier venant en appui sur le profil externe de chacune des rainures, en deux zones séparées l'une de l'autre sensiblement d'un demi-pas des rainures hélicoïdales. Ce dispositif 1 constitue une cage suiveuse de pas des rainures lorsque le noyau 2 est entraîné en translation : une avance en translation du noyau 2 selon la flèche F2 d'un pas des rainures provoque une rotation d'un tour du dispositif 1 selon la flèche F1.

Ainsi, que visible dans la figure 2, chacun des flasques 11 et 12 est évidé dans sa partie centrale et présente une fente 15 ou 16 s'étendant de la partie centrale évidée à la périphérie du flasque considéré. Ces fentes sont prévues de largeur au moins légèrement supérieure au diamètre du noyau 2, de manière à permettre un montage direct du dispositif 1 sur ce noyau, c'est-à-dire sans démontage préalable du dispositif 1 ou coupure du noyau 2.

Ce dispositif 1 est, dans l'exemple illustré, utilisé dans un poste de mise en place de fibres optiques dans les rainures hélicoïdales 21 et 22 du noyau 2 qui est alors un noyau porteur d'un câble à fibres optiques à constituer.

Les fibres optiques sont fournies par deux bobines débitrices 30 et 31 et sont désignées par 32 et 33. Ces bobines 30 et 31 sont libres en rotation sur leurs axes respectifs 34 et 35, et montées, par l'intermédiaire de bras non référencés, sur un support cylindrique 3 entraîné en rotation selon la flèche F3 par un moteur électrique 4 porté par un socle 40. Les fibres optiques initialement insérées et maintenues dans les rainures, à l'extrémité du noyau porteur, viendront lors de la translation du noyau et la rotation du support 3 automatiquement se loger dans les rainures, ceci lors d'un synchronisme entre l'avance en translation du noyau et la rotation du support 3.

A cet effet, le dispositif 1 selon l'invention est monté sur une portion libre de fibres du noyau porteur 2, il suit en une rotation d'un tour autour de l'axe du noyau l'avance en translation du noyau d'un pas des rainures. Un élément cylindrique 5 est monté solidaire de l'un des flasques et le prolonge le long du noyau porteur. Cet élément 5 peut ou non appartenir au dispositif 1 et peut ou non former une seule pièce cylindrique avec le flasque 12. Il est évidé longitudinalement selon l'axe du noyau qui le traverse et présente une rainure longitudinale non visible et donc non référencée s'étendant de cet évidement central à sa périphérie, de manière analogue aux flasques, pour permettre sa mise en place autour du noyau avec le dispositif 1 auquel il est solidarisé ou appartient.

Un détecteur électrique 6 de position angulaire de l'élément 5 est couplé à cet élément 5, de manière analogue, un deuxième détecteur électrique 7 de position angulaire du support des bobines 3 est couplé au moteur 4. Ces deux détecteurs 6 et 7 sont reliés, par des liaisons électriques 60 et 70 respectivement, à un circuit comparateur 8 qui délivre en sortie un signal d'erreur entre les signaux qu'il reçoit. Ce signal d'erreur est appliqué à travers un amplificateur 9, à la commande du moteur 4 entraînant le support 3 des bobines, pour corriger en permanence les écarts entre la position angulaire du support des bobines entraîné en rotation et celle apparente des rainures donnée par le dispositif 1. On réalise ainsi un asservissement permanent de la phase de la rotation du support des bobines à celle de la rotation apparente des rainures qui traduit le déplacement en translation du noyau porteur rainuré 2.

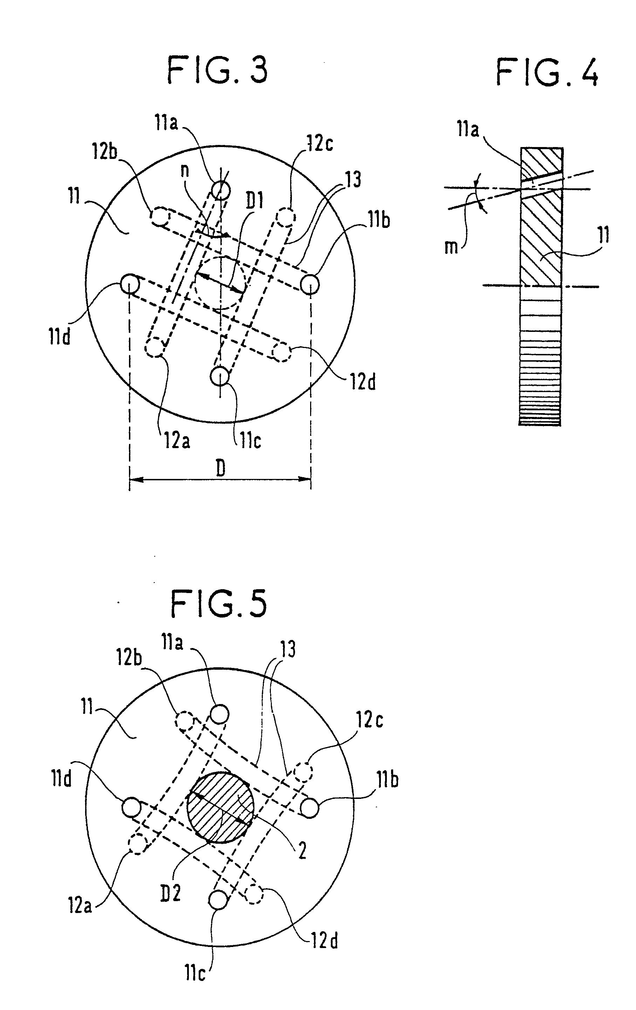

Dans les figures 3 et 5, on a illustré le dispositif 1 vu du côté du flasque 11 respectivement avant et après positionnement sur le noyau rainuré 2, le flasque 11 étant dans ces deux figures représenté non fendu pour la clarté de la représentation.

Dans ces figures, en considérant le flasque 11, comme le flasque 12 dont le contour est confondu avec celui du flasque 11, sans épaisseur, on a repéré en 11a à 11d les points d'ancrage des fils 13 sur le flasque 11 et en 12a à 12d les points d'ancrage respectivement correspondant sur le flasque 12 ou leurs projections orthogonales sur le flasque 11, et fait apparaître les quatre fils 13, ou leurs projections sur le flasque 11, qui relient les paires de points 11a, 12a à 11d, 12d respectivement.

En regard de la figure 4 notamment qui représente, selon une demi-coupe axiale du flasque 11, l'un des perçages d'ancrage, on voit que chacun des perçages d'ancrage tel que le perçage référencé 11a comme le point d'ancrage, qui lui correspond, est formé en biais. Dans la figure 4 on a repéré par m l'angle de perçage par rapport à la normale à la face du flasque et dans la figure 3 on a repéré par n l'angle de la projection de la direction du perçage 11a sur la face du flasque avec le rayon correspondant passant par le point d'ancrage, ces deux angles définissant la direction pour chacun des perçages. Ces angles m et n de perçage joints à la distance d entre flasques (fig.2) et au diamètre D du cercle passant par les points d'ancrage définissent le diamètre D1 du cylindre théorique intercepté par les fils 13 dans la zone médiane du dispositif 1, ce diamètre D1 étant, par le choix des paramètres m, n, D et d légèrement inférieur au diamètre D2 du noyau rainuré 2. Dans ces conditions, les fils 13, engagés droit dans les perçages et sans aucun préformage, sont rectilignes et sans torsion d'un flasque à l'autre.

En regard de la figure 2 et de la figure 5, on comprendra que lors du montage du dispositif 1 sur le noyau 2, dont le diamètre D2 est supérieur au diamètre D1 précité, les fils 13 ancrés dans les flasques viennent travailler en ressort sur le noyau 2 dans la zone médiane du dispositif 1 et provoquent une rotation du flasque 12 par rapport au flasque 11, ainsi que schématisé par les décalages relatifs des divers points d'ancrage de la figure 3 à la figure 5. La force d'appui des fils 13 sur le noyau 2 dans cette zone médiane est alors définie par la force de rappel en flexion des fils 13 mais essentiellement par la force de rappel en torsion des fils 13 due à la rotation relative des flasques au montage du dispositif 1 sur le noyau 2.

Le dispositif 1, ou cage suiveuse de la rotation apparente des rainures, tel qu'utilisé dans le poste de pose de fibres dans les rainures d'un noyau porteur, présente comme avantages notamment d'être très robuste, de réalisation simple et économique. Du fait de sa réalisation en fils formant ressort, ainsi qu'il découle de la description des figures 3 et 5 essentiellement, le dispositif 1 ne nécessite aucun réglage précis. De plus, ces fils formant ressort et qui, normalement, viennent s'appliquer étroitement sur le profil externe des rainures, conservent la possibilité de s'éclipser momentanément lors d'un défaut éventuel faisant saillie sur les bords de l'une quelconque des rainures rencontré par l'un d'eux, sans qu'il y ait incidence sur la vitesse de rotation du dispositif 1. Enfin du fait de l'appui des fils d'acier sur le profil externe des rainures, il n'y a aucune usure ni dégradation du profil interne des rainures dans lesquelles seront insérées les fibres optiques.

REVENDICATIONS

1/ Dispositif suiveur de pas de rainures hélicoïdales à la périphérie d'un noyau longitudinal entraîné en translation, caractérisé en ce qu'il comporte, montés autour dudit noyau, deux flasques (11, 12) reliés l'un à l'autre par des fils métalliques (13) formant ressort s'appliquant sur les rainures (21, 22) pour suivre leur rotation apparente lors de la translation dudit noyau (2).

2/ Dispositif selon la revendication 1, caractérisé en ce que lesdits flasques présentent des perçages d'ancrage en biais (11a - 11d, 12a - 12d) définissant pour les fils des directions d'ancrage deux à deux alignées et décalées angulairement sur l'un et l'autre des flasques respectivement et pour lesquelles lesdits fils engagés droit dans les perçages d'ancrage et sans préformage viennent former ressort sur ledit noyau rainuré (2) dans une zone médiane du dispositif.

3/ Dispositif selon l'une des revendications 1 et 2, caractérisé par le fait que lesdits fils (13) sont choisis de diamètre supérieur à la largeur desdites rainures (21, 22) pour venir ainsi en appui sur leur profil externe.

4/ Dispositif selon l'une des revendications 1 à 3 , caractérisé en ce que chacun desdits flasques (11, 12) est évidé dans sa partie centrale et comporte une fente (15, 16) s'étendant de sa partie centrale évidée à sa périphérie, permettant la mise en place, sans démontage, du dispositif autour dudit noyau rainuré (2).

5/ Dispositif selon la revendication 4, caractérisé par le fait qu'il comporte un élément cylindrique (5) solidaire de l'un des flasques (12) à évidement longitudinal central et à fente débouchant sur sa périphérie prolongeant l'évidement central et la fente (16) de ce flasque (12).

6/ Dispositif selon la revendication 1, caractérisé par le fait que lesdits fils (13) sont des fils d'acier.

7/ Dispositif selon l'une des revendications 1 à 6 , dans un poste de pose de fibres optiques dans les rainures hélicoïdales périphériques d'un noyau porteur, caractérisé en ce qu'il est couplé à un détecteur électrique (6) de position angulaire apparente des rainures lors de l'entraînement en translation dudit noyau porteur (2) pour élaborer un signal de commande d'asservissement de phase de la rotation d'un support (3) de bobines débitrices de fibres optiques entraîné en rotation autour dudit noyau porteur (2).

# FIG.1

# FIG.2

FIG. 3

FIG. 4

FIG. 5

Office européen
des brevets

**RAPPORT DE RECHERCHE EUROPEENNE**

## DOCUMENTS CONSIDERES COMME PERTINENTS

| Catégorie | Citation du document avec indication. en cas de besoin, des parties pertinentes | Revendication concernée | CLASSEMENT DE LA DEMANDE (Int. Cl. ³) |
|---|---|---|---|
| A | <u>EP - A - 0 003 930</u> (S.A.L.T.T.)<br>* Revendications; figures *<br><br>-- | 1 | G 02 B 5/16<br>H 01 B 13/00 |
| A | <u>EP - A - 0 020 189</u> (S.A.L.T.T.)<br>* Revendications; figures *<br><br>-- | 1 | |
| A | <u>GB - A - 2 022 644</u> (N.T.L.)<br>* Résumé; figures 1,3 *<br><br>-- | 1 | |
| A | <u>GB - A - 2 023 060</u> (N.T.L.)<br>* Résumé; figures 1,2,5 *<br><br>---- | 1 | |

DOMAINES TECHNIQUES
RECHERCHES (Int. Cl. ³)

G 02 B 5/16
H 01 B 13/

Le présent rapport de recherche a été établi pour toutes les revendications

| Lieu de la recherche | Date d'achèvement de la recherche | Examinateur |
|---|---|---|
| La Haye | 07-07-1982 | PFAHLER |